# EUROPÄISCHE PATENTSCHRIFT

(11) **EP 4 532 195 B1**
(45) Veröffentlichungstag und Bekanntmachung des Hinweises auf die Patenterteilung: **11.03.2026**
(21) Anmeldenummer: 23716228.4
(22) Anmeldetag: 29.03.2023
(51) Int. Cl.: B32B 17/10, B60Q 3/208

(54) **SCHEIBENBAUGRUPPE FÜR EIN KRAFTFAHRZEUG**
PANEL ASSEMBLY FOR A MOTOR VEHICLE
ENSEMBLE PANNEAU POUR VÉHICULE À MOTEUR

(30) Priorität: 30.05.2022 DE 102022001884
(43) Veröffentlichungstag der Anmeldung: 09.04.2025
(73) Patentinhaber: Mercedes-Benz Group AG, 70372 Stuttgart (DE)
(72) Erfinder: BIEDER, Hubert, 73770 Denkendorf (DE)
(74) Vertreter: Novagraaf Group
(86) Internationale Anmeldenummer: PCT/EP2023/058090
(87) Internationale Veröffentlichungsnummer: WO 2023/232312

(56) Entgegenhaltungen:
- EP-B1- 2 983 909
- WO-A1-2008/083915
- WO-A1-2022/095959
- US-B2- 7 943 940

## Beschreibung

Die vorliegende Erfindung betrifft eine Scheibenbaugruppe, insbesondere eine Dachscheibenbaugruppe, für ein Kraftfahrzeug. Die Erfindung betrifft des Weiteren eine ein Kraftfahrzeug mit einer solchen Scheibenbaugruppe.

Kraftfahrzeuge weisen in der Regel Scheiben auf, durch welche hindurch für Insassen des Kraftfahrzeugs die Sicht nach außen ermöglicht wird. Hierzu gehören beispielsweise die Windschutzscheibe und Seitenscheiben. Auch können solche Scheiben in einem Dach des Kraftfahrzeugs angeordnet werden, um die Sicht nach oben zu ermöglichen und/oder Licht von außen in das Kraftfahrzeug eindringen zu lassen.

Insbesondere die Integration von Scheiben im Dach des Kraftfahrzeugs führt zu einer Einschränkung der Beleuchtungsmöglichkeiten.

Aus der DE 10 2008 045 474 A1 ist eine Kraftfahrzeugscheibe bekannt, welche eine erste transparente Schicht und zumindest einen auf der Schicht angeordneten Leuchtkörper aufweist. Auf der ersten Schicht ist ferner eine transparente Leiterstruktur zur Energieversorgung der Leuchtkörper vorgesehen.

Die DE 10 2004 007 555 A1 beschreibt eine Innenlicht-Leuchte für Fahrzeuge mit einem Glasdach. Die Leuchte weist eine Lichtscheibe sowie ein Lichteinkopplungselement auf, welches aus einem Leuchtmittel stammendes Licht seitlich in die Lichtscheibe einkoppelt. Um das Licht nur aus einer Seite der Lichtscheibe gelangen zu lassen, weist die Lichtscheibe eine Abschatteinrichtung auf.

Aus der WO 2008/083915 A1 ist eine laminierte Fahrzeugverglasung bekannt, die zwei Scheiben aus Verglasungsmaterial und eine die Scheiben verbindende Zwischenschicht aufweist. Mehrere Leuchtmittel sind an einer Oberfläche einer der Scheiben angeordnet. Weitere Beleuchtungssysteme sind aus der US 7,943,940 B2, aus der WO 2022/095959 A1 und aus der EP 2 983 909 B1 bekannt.

Die vorliegende Erfindung beschäftigt sich mit der Aufgabe, für eine Scheibenbaugruppe für ein Kraftfahrzeug sowie für ein Kraftfahrzeug mit einer solchen Scheibenbaugruppe verbesserte oder zumindest andere Ausführungsformen anzugeben, welche insbesondere Nachteile aus dem Stand der Technik beseitigen. Insbesondere beschäftigt sich die vorliegende Erfindung mit der Aufgabe, für die Scheibenbaugruppe und für das Kraftfahrzeug Ausführungsformen anzugeben, welche sich durch eine verbesserte Beleuchtung auszeichnen.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht demnach auf dem allgemeinen Gedanken, eine Scheibe für ein Kraftfahrzeug als eine Baugruppe bereitzustellen, in welcher Leuchtmittel Licht in Richtung einer Basisscheibe ausgeben, wobei auf der von den Leuchtmitteln abgewandten Seite der Basisscheibe lokale Spiegelungen vorgesehen sind, welche das Licht der Leuchtmittel zurück reflektieren, sodass das Licht außerhalb der Spiegelungen aus der Basisscheibe tritt und somit ausgegeben wird. Dies führt dazu, dass die Leuchtmittel in der Baugruppe, welche nachfolgend auch als Scheibenbaugruppe bezeichnet wird, beliebig und insbesondere näher an vorgegebene Ausgabestellen des Lichts angeordnet werden können, sodass mit der Scheibenbaugruppe Licht mit erhöhter Lichtstärke über die gesamte Scheibenbaugruppe ausgegeben werden kann. Mit den Spiegelungen wird ferner die Ausgabe des Lichts lokal verhindert, sodass eine individuelle Ausgabe des Lichts, insbesondere von Lichtmustern, umgesetzt wird. Die Spiegelungen können ferner eingesetzt werden, um die Stärke des ausgegebenen Lichts lokal zu reduzieren, um beispielsweise Bereiche mit verstärkter Lichtausgabe, sogenannte "Hotspots", welche sich üblicherweise unmittelbar unterhalb der Leuchtmittel befinden, zu vermeiden oder die Lichtstärke in diesen Bereichen zumindest zu reduzieren. Insgesamt ist es somit also möglich, Licht mit erhöhter Lichtstärke über die gesamte Scheibenbaugruppe auszugeben und zugleich die Ausgabe des Lichts individuellen Bedürfnissen anzupassen. Insbesondere ist es möglich, die Ausgabe des Lichts im Bereich eines Kopfs und/oder in Richtung von Augen von Insassen des Kraftfahrzeugs zu reduzieren. Im Ergebnis führt die Scheibenbaugruppe zu einer individuellen Ausgabe von Licht und zugleich zu einem erhöhten Komfort.

Dem Erfindungsgedanken entsprechend weist die Scheibenbaugruppe eine transparente Scheibe auf, welche die Basisscheibe ist. Die Basisscheibe weist zwei voneinander abgewandte Seiten auf, welche nachfolgend auch als Basisscheiben-Innenseite und Basisscheiben-Außenseite bezeichnet werden. Die Scheibenbaugruppe weist ferner eine Anordnung mit zumindest einem Leuchtmittel auf, welche nachfolgend auch als Leuchtmittelanordnung bezeichnet wird. Die Leuchtmittelanordnung und somit das zumindest eine Leuchtmittel ist auf der von der Basisscheiben-Innenseite abgewandten Seite der Basisscheiben-Außenseite angeordnet. Das jeweilige Leuchtmittel ist derart ausgestaltet, dass es im Betrieb Licht erzeugt und in Richtung der Basisscheiben-Innenseite ausgibt. Zudem weist die Scheibenbaugruppe eine Spiegelungsanordnung auf. Die Spiegelungsanordnung ist auf der Basisscheiben-Innenseite angeordnet und weist zumindest einen Spiegelabschnitt und zumindest einen Durchlassabschnitt auf. Der jeweilige Spiegelabschnitt ist derart ausgestaltet, dass der Spiegelabschnitt das Licht zumindest eines der wenigstens einen Leuchtmittel, vorzugsweise des jeweiligen Leuchtmittels, hin zur Basisscheiben-Außenseite zurück reflektiert. Der jeweilige Durchlassabschnitt ist derart ausgestaltet, dass der Durchlassabschnitt für das Licht zumindest eines der wenigstens einen Leuchtmittel, vorzugsweise des jeweiligen Leuchtmittels, transparent ist, sodass das Licht durch den zumindest einen Durchlassabschnitt aus der Scheibenbaugruppe tritt und ausgegeben wird.

Vorzugsweise ist die Spiegelungsanordnung mit dem zumindest einen Spiegelabschnitt spiegelnd und reflektiert somit das Licht des zumindest einen Leuchtmittels zurück und im Übrigen transparent. In der Folge kann Licht über die Spiegelungsanordnung außerhalb des zumindest einen Spiegelabschnitt treten und somit ausgegeben werden.

Unter "transparent" ist vorliegend für das Licht zumindest eines der wenigstens einen Leuchtmittels, vorzugsweise des jeweiligen Leuchtmittels, durchlässig zu verstehen.

Vorzugsweise ist unter "transparent" für sichtbares Licht insgesamt durchlässig zu verstehen. Somit kann also von dem zumindest einen Leuchtmittel erzeugtes Licht über die Basisscheiben-Innenseite bzw. die Spiegelungsanordnung ausgegeben werden und zugleich Licht, insbesondere Tageslicht, aus der Umgebung durch die Scheibenbaugruppe hindurch gelangen. Dies ermöglicht es insbesondere, neben dem Eindringen des Lichts von außen durch die Scheibenbaugruppe auch, durch die Scheibenbaugruppe hindurch zu schauen.

Die Scheibenbaugruppe kommt vorteilhaft in einem Kraftfahrzeug zum Einsatz.

Im Kraftfahrzeug wird mittels der Leuchtmittelanordnung vorzugsweise ein Innenraum, insbesondere ein Fahrgastraum, individuell beleuchtet und/oder ausgeleuchtet.

Vorteilhaft begrenzt die Scheibenbaugruppe den Innenraum des Kraftfahrzeugs.

Vorteilhaft ist die Basisscheiben-Innenseite bzw. die Spiegelungsanordnung dem Innenraum des Kraftfahrzeugs zugewandt.

Vorstellbar ist es, dass die Scheibenbaugruppe als eine Seitenscheibe des Kraftfahrzeugs und/oder als ein Seitenfenster des Kraftfahrzeugs oder eines Teils davon zum Einsatz kommt.

Vorteilhaft kommt die Scheibenbaugruppe in einem Dach des Kraftfahrzeugs zum Einsatz, ist also eine Dachscheibenbaugruppe. Somit erzeugt die Scheibenbaugruppe im Betrieb der Leuchtmittelanordnung für Insassen des Kraftfahrzeugs individuell und zielgerichtet Licht. Zugleich können die Insassen des Kraftfahrzeugs durch die Dachscheibenbaugruppe nach außen schauen. Die Dachscheibenbaugruppe dient also vorzugsweise als ein Panoramadach des Kraftfahrzeugs oder ist ein Teil des Panoramadachs. Dabei kann mittels der Dachscheibenbaugruppe insbesondere eine individuelle Beleuchtung in der Art eines Dachhimmels und/oder eine Ambientebeleuchtung umgesetzt werden.

Die Leuchtmittelanordnung der Scheibenbaugruppe kann ein einziges Leuchtmittel aufweisen.

Vorteilhaft weist die Leuchtmittelanordnung zumindest zwei Leuchtmittel auf. Zweckmäßig sind die Leuchtmittel zueinander beabstandet. Vorteilhaft sind die Leuchtmittel in der Scheibenbaugruppe und insbesondere in der Leuchtmittelanordnung gleichmäßig verteilt. Dies erlaubt die gleichmäßige und individuelle sowie gezielte Ausgabe von Licht.

Das jeweilige Leuchtmittel kann beliebig ausgestaltet sein, sofern es im Betrieb Licht erzeugt und in Richtung der Basisscheiben-Innenseite ausgibt.

Vorteilhaft ist zumindest eines der wenigstens einen Leuchtmittel, vorzugsweise das jeweilige Leuchtmittel, eine Leuchtdiode oder kurz LED. Dies erlaubt eine kompakte Bauweise der Scheibenbaugruppe, eine erhöhte Anzahl an Leuchtmitteln und führt zu einem reduzierten Energieverbrauch.

Weist die Leuchtmittelanordnung zwei oder mehr Leuchtmittel auf, können zumindest zwei der Leuchtmittel Licht unterschiedlicher Art, beispielsweise unterschiedlicher Farbe und/oder Lichtstärke, Erzeugen.

Bevorzugt sind Ausführungsformen, bei denen die Leuchtmittel gleicher Art Erzeugen. Somit ist eine einfache und kostengünstige Umsetzung der Scheibenbaugruppe erreicht, wobei zugleich mittels der Spiegelungsanordnung eine individuelle Ausgabe des Lichts sowie die Vermeidung von Hotspots, wiederum auf einfache und kostengünstige Weise, umgesetzt ist.

Der jeweilige Spiegelabschnitt kann auf beliebige Weise umgesetzt sein, sofern er das Licht zumindest eines der wenigstens einen Leuchtmittels, vorzugsweise des jeweiligen Leuchtmittels, zurück reflektiert.

Vorteilhaft ist zumindest einer der wenigstens einen Spiegelabschnitte, insbesondere der jeweilige Spiegelabschnitt, eine reflektierende Schicht.

Zumindest einer der wenigstens einen Spiegelabschnitte, insbesondere der jeweilige Spiegelabschnitt, kann unmittelbar auf die Basisscheiben-Innenseite aufgebracht sein.

Vorstellbar sind auch Ausführungsformen, bei denen die Spiegelungsanordnung eine Folie mit zumindest einem Spiegelabschnitt aufweist. Die Folie ist bevorzugt im Übrigen transparent.

Bei vorteilhaften Ausführungsformen weist die Spiegelungsanordnung zumindest zwei Spiegelabschnitte und zumindest einen die Spiegelabschnitte entlang der Basisscheiben-Innenseite voneinander trennende Durchlassabschnitt auf. Somit kann eine individuellere Ausgabe des von dem zumindest einen Leuchtmittel erzeugten Lichts erfolgen.

Als vorteilhaft gelten Ausführungsformen, bei welchen die Scheibenbaugruppe das von dem zumindest einen Spiegelabschnitt zurück reflektierte Licht streuende Abschnitte aufweist, wobei diese Abschnitte nachfolgend auch als Streuabschnitte bezeichnet werden. Bevorzugt sind demnach Ausführungsformen, bei welchen auf der von der Basisscheiben-Innenseite abgewandten Seite der Basisscheiben-Außenseite eine Streustruktur mit zumindest einem Streuabschnitt angeordnet ist. Der jeweilige Streuabschnitt ist derart ausgestaltet ist, dass der Streuabschnitt das von der Spiegelungsanordnung zurück reflektierte Licht in Richtung der Basisscheiben-Innenseite streut. Das gestreute Licht wird somit über den zumindest einen Durchlassabschnitt aus der Scheibenbaugruppe als gestreutes bzw. diffuses Licht ausgegeben. Dies führt zu einer weiteren Individualisierung der Ausgabe des Lichts. Zudem ist es auf diese Weise möglich, Bereiche zu definieren, über welchen das von dem zumindest einen Leuchtmittel erzeugte Licht unmittelbar gelangt und andere Bereiche, über welche das von dem zumindest einen Leuchtmittel erzeugte Licht als gestreutes bzw. diffuses Licht ausgegeben wird.

Die Scheibenbaugruppe weist vorteilhaft eine Deckscheibe auf, wobei die Leuchtmittelanordnung zwischen der Deckscheibe und der Basisscheibe angeordnet. Das heißt, dass die Scheibenbaugruppe auf der von der Basisscheiben-Außenseite abgewandten Seite der Leuchtmittelanordnung die Deckscheibe aufweist.

Vorteilhaft ist die Leuchtmittelanordnung an der Deckscheibe angebracht. Dies führt zu einer einfachen Herstellung und einem kompakten Aufbau der Scheibenbaugruppe.

Bei bevorzugten Ausführungsformen weist die Leuchtmittelanordnung eine funktionalisierte Folie, nachfolgend auch als Funktionsfolie bezeichnet, auf. Die Funktionsfolie ist vorteilhaft elektrisch isolieren und bevorzugt aus Kunststoff. Die Funktionsfolie ist vorteilhaft durch Spritzguss hergestellt. Dabei ist zumindest eines der wenigstens einen Leuchtmittel, bevorzugt das jeweilige Leuchtmittel, an der Funktionsfolie angebracht. Derartige Funktionsfolien können auf einfache Weise zwischen Scheiben und an einer Scheibe angebracht und/oder verarbeitet werden. Somit wird die Herstellung der Scheibenbaugruppe vereinfacht und zudem die Scheibenbaugruppe kompakter.

Das Anbringen des zumindest einen Leuchtmittels an der Funktionsfolie kann auf beliebige Weise erfolgen. Insbesondere wird das zumindest eine Leuchtmittel an der Funktionsfolie gefügt, beispielsweise geklebt.

Bevorzugt ist die Funktionsfolie an der Deckscheibe angebracht, insbesondere an der der Basisscheibe zugewandten Seite Deckscheibe geklebt. Dies führt zu einer vereinfachten Herstellung der Scheibenbaugruppe.

Vorteilhaft weist die Funktionsfolie zumindest eine elektrische Leiterbahn zur elektrischen Versorgung des zumindest einen Leuchtmittels auf. Bei bevorzugten Ausführungsformen ist die Funktionsfolie mit der zumindest einen Leiterbahn bedruckt. Dies führt zu einer kompakten Ausbildung und einer kostengünstigen Herstellung der Scheibenbaugruppe.

Der Einsatz solcher Funktionsfolien ist beispielsweise aus sogenannten "intelligenten Gläsern" oder "Smartglasses", insbesondere in "Polymer-dispersed liquid-crystal devices" oder kurz "PDLCs" sowie aus "Suspended Particle Divices" oder kurz "SPDs" bekannt. In der Folge lässt sich die Scheibenbaugruppe auf einfache, kostengünstige sowie präzise Art herstellen.

Bei vorteilhaften Ausführungsformen ist zumindest einer der wenigstens einen Streuabschnitte, insbesondere die Streustruktur, an der Funktionsfolie angebracht. Dies führt zu einer weiteren Vereinfachung der Herstellung der Scheibenbaugruppe und zugleich zu einer präzisen Anordnung des zumindest einen Streuabschnitts und somit zu einer präziseren Lichtausgabe.

Bei bevorzugten Ausführungsformen weist die Spiegelungsanordnung an der Basisscheiben-Innenseite im Lichtkegel zumindest eines der wenigstens einen Leuchtmittel, vorzugsweise des jeweiligen Leuchtmittels, solche Spiegelabschnitte auf und ist außerhalb des Lichtkegels frei von Spiegelabschnitten. Außerhalb des Lichtkegels ist also ein von Spiegelabschnitten freier Bereich der Spiegelungsanordnung angeordnet, welche nachfolgend auch als Durchlassbereich bezeichnet wird. Somit werden besagte Hotspots auf einfache und effektive Weise vermieden und zugleich eine gezielte und/oder großflächige Ausgabe des Lichts erreicht.

Die Streustruktur ist vorteilhaft im Bereich zumindest eines der wenigstens einen Leuchtmittel frei von Streuabschnitten und weist zum Leuchtmittel beabstandet Streuabschnitte auf. Die Streustruktur weist also zumindest einen von Streuabschnitten freien Bereich auf, welcher nachfolgend auch als Freibereich bezeichnet wird. Zweckmäßig ist das jeweilige Leuchtmittel in einem zugehörigen Freibereich angeordnet.

Als bevorzugt gelten Ausführungsformen, bei denen von Spiegelabschnitten freie Durchlassbereiche der Spiegelungsanordnung und von Streuabschnitten freie Freibereiche der Streustruktur quer zur Abstandsrichtung der Basisscheiben-Innenseite zur Basisscheiben-Außenseite zueinander beabstandet sind. Bevorzugt überlappt zumindest einer der wenigstens einen Durchlassbereiche quer zur Abstandsrichtung mit Streuabschnitten. In der Folge wird die direkte Ausstrahlung des Lichts zumindest eines der wenigstens einen Leuchtmittel verhindert oder zumindest reduziert, sodass Hotspots vermieden oder zumindest reduziert werden. Zugleich wird außerhalb besagten Hotspots die großflächige und diffuse Ausgabe des Lichts erreicht.

Es versteht sich, dass neben der Scheibenbaugruppe auch ein Kraftfahrzeug mit einer solchen Scheibenbaugruppe zum Umfang dieser Erfindung gehört.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: einen stark vereinfachten Schnitt durch ein Kraftfahrzeug mit einer Scheibenbaugruppe,
- Fig. 2: einen Schnitt durch die Scheibenbaugruppe,
- Fig. 3: eine Draufsicht auf eine Spiegelungsanordnung der Scheibenbaugruppe.

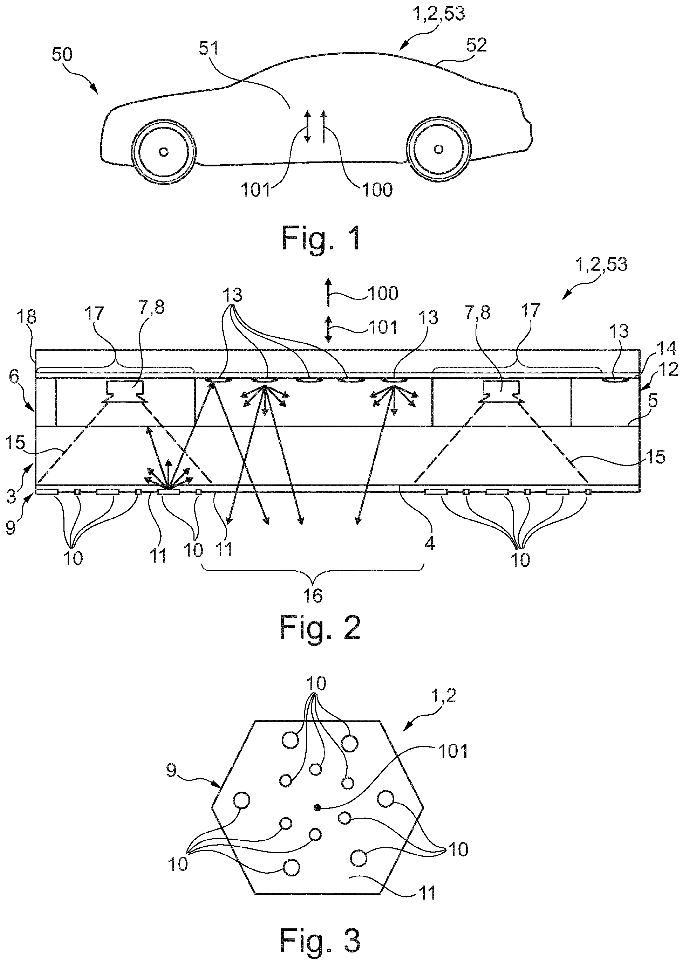

Eine Scheibenbaugruppe 1, wie sie in den Figuren 1 bis 3 beispielhaft dargestellt ist, kommt in einem Figur 1 beispielhaft dargestellten Kraftfahrzeug 50 zum Einsatz. In dem gezeigten Ausführungsbeispiel kommt die Scheibenbaugruppe 1 an einem Dach 52 des Kraftfahrzeugs 50 zum Einsatz und ist somit eine Dachscheibenbaugruppe 2, welche Bestandteil eines Panoramadachs 53 des Kraftfahrzeugs 50 ist oder das Panoramadach 53 bildet. Die Scheibenbaugruppe 1 begrenzt dabei einen Innenraum 51 des Kraftfahrzeugs 50 für Insassen (nicht gezeigt). Folglich begrenzt die als Dachscheibenbaugruppe 2 ausgebildete Scheibenbaugruppe 1 den Innenraum 51 in einer Z-Richtung 100 des Kraftfahrzeugs 50.

Wie dem in Figur 2 gezeigten Schnitt durch die Scheibenbaugruppe 1 entnommen werden kann, weist die Scheibenbaugruppe 1 eine transparente Scheibe 3 auf, welche nachfolgend auch als Basisscheibe 3 bezeichnet wird. Die Basisscheibe 3 weist zwei voneinander abgewandte Seiten 4, 5 auf, welche nachfolgend auch als Basisscheiben-Innenseite 4 und Basisscheiben-Außenseite 5 bezeichnet werden. Die Basisscheiben-Innenseite 4 und die Basisscheiben-Außenseite 5 sind in einer Richtung 101 zueinander beabstandet, welche nachfolgend auch als Abstandsrichtung 101 bezeichnet wird. Die Abstandsrichtung 101 verläuft im gezeigten Ausführungsbeispiel im Wesentlichen parallel zur Z-Richtung 100. Die Scheibenbaugruppe 1 weist ferner eine zumindest ein Leuchtmittel 7 umfassende Anordnung 6 auf, welche nachfolgend auch als Leuchtmittelanordnung 6 bezeichnet wird. In dem gezeigten Ausführungsbeispiel weist die Leuchtmittelanordnung 6 zumindest zwei Leuchtmittel 7 auf, wobei in der Schnittdarstellung der Figur 2 zwei solche Leuchtmittel 7 zu sehen sind. In dem gezeigten Ausführungsbeispiel ist das jeweilige Leuchtmittel 7 als eine LED 8 ausgebildet. Die Leuchtmittelanordnung 6 und somit das zumindest eine Leuchtmittel 7 ist auf der von der Basisscheiben-Innenseite 4 abgewandten Seite der Basisscheiben-Außenseite 5 angeordnet. Das jeweilige Leuchtmittel 7 ist derart ausgestaltet, insbesondere derart ausgerichtet, dass es im Betrieb Licht erzeugt und in Richtung der Basisscheiben-Innenseite 4 ausgibt. In der Darstellung der Figur 2 ist das vom linken Leuchtmittel 7 erzeugte und ausgegebene Licht und dessen Verlauf bzw. Ausbreitung mit Pfeilen beispielhaft angedeutet. Die Scheibenbaugruppe 1 weist ferner eine Anordnung 9 auf, welche nachfolgend auch als Spiegelungsanordnung 9 bezeichnet wird. Die Spiegelungsanordnung 9 ist auf der Basisscheibe-Innenseite 4 angeordnet. Die Spiegelungsanordnung 9 weist zumindest einen das Licht zumindest eines der Leuchtmittel 9, im gezeigten Ausführungsbeispiel und bevorzugt des jeweiligen Leuchtmittels 9, reflektierenden Abschnitt 10 auf, welcher nachfolgend auch als Spiegelabschnitt 10 bezeichnet wird. Der jeweilige Spiegelabschnitt 10 ist derart ausgestaltet, dass der Spiegelabschnitt 10 das Licht der Leuchtmittel 7 hin zur Basisscheiben-Außenseite 5 zurück reflektiert, wie in Figur 2 bei einem der Spiegelabschnitte 10 angedeutet. Die Spiegelungsanordnung 9 weist ferner wenigstens einen für das Licht zumindest eines der Leuchtmittel 9, vorliegend und bevorzugt für das sichtbares Licht insgesamt, transparenten Abschnitt 11 auf, welcher nachfolgend auch als Durchlassabschnitt 11 bezeichnet wird. Der jeweilige Durchlassabschnitt 11 ist also derart ausgestaltet, dass der Durchlassabschnitt 11 für das Licht der Leuchtmittel 7 transparent ist, sodass das Licht über die Durchlassabschnitte 11 aus dem Scheibenbaugruppe 1 tritt und somit ausgegeben wird. Somit ist es bei einer kompakten Bauweise möglich, aus der Scheibenbaugruppe 1 über die Basisscheibe-Innenseite 4 Licht mit einem beliebigen Muster und/oder mit einer erhöhten Lichtstärke auszugeben.

Figur 3 zeigt dabei eine Draufsicht auf die Spiegelungsanordnung 9. Wie Figur 3 entnommen werden kann, weist die Spiegelungsanordnung 9 bei dem gezeigten Ausführungsbeispiel mehrere zueinander beabstandete Spiegelungsabschnitte 10 sowie einen zusammenhängenden Durchlassabschnitt 11 auf, welcher die Spiegelabschnitte 10 entlang der Basisscheibe-Innenseite 4 voneinander trennt. Wie Figur 3 ferner entnommen werden kann, weist die Spiegelungsanordnung 9 im gezeigten Ausführungsbeispiel Spiegelabschnitte 10 unterschiedlicher Größe auf. Der jeweilige Spiegelabschnitt 10 kann durch eine entsprechend spiegelnde Beschichtung der Basisscheiben-Innenseite 4 oder einer auf der Basisscheibe-Innenseite 4 angebrachten Folie (jeweils nicht gezeigt) ausgebildet sein.

Wie in Figur 1 angedeutet, begrenzt im gezeigten Ausführungsbeispiel die Scheibenbaugruppe 1 mit der Basisscheibe-Innenseite 4 bzw. der Spiegelungsanordnung 9 den Innenraum 51 des Kraftfahrzeugs 50. Mit der Scheibenbaugruppe 1 ist es somit beispielsweise möglich, einen Dachhimmel im Panoramadach 53 zu integrieren.

Im gezeigten Ausführungsbeispiel ist die Leuchtmittelanordnung 6 zwischen der Basisscheibe 3 und einer Deckscheibe 18 der Scheibenbaugruppe 1 angeordnet. Die Scheibenbaugruppe 1 weist also auf der von der Basisscheiben-Außenseite 5 abgewandten Seite der Leuchtmittelanordnung 6 die Deckscheibe 18 auf.

Im gezeigten Ausführungsbeispiel weist die Leuchtmittelanordnung 6, wie Figur 2 entnommen werden kann, eine Funktionsfolie 14 aus Kunststoff auf, an welcher die Leuchtmittel 7 angebracht sind. Dabei ist die Funktionsfolie 16 und somit die Leuchtmittelanordnung 6 an der Deckscheibe 18 angebracht. Die Leuchtmittel 7, insbesondere die LEDs 8, können auf der Funktionsfolie 14 geklebt sein. Zudem können auf der Funktionsfolie 14 nicht gezeigte Leiterbahnen zur elektrischen Versorgung der Leuchtmittel 7 gedruckt sein.

Die Scheibenbaugruppe 1 weist im gezeigten Ausführungsbeispiel, wie Figur 2 entnommen werden kann, eine Struktur 12 auf, welche mit Abschnitten 13 das von der Spiegelungsanordnung 9 zurück reflektierte Licht in Richtung der Basisscheibe-Innenseite 4 streut, sodass gestreutes bzw. diffuses Licht über den zumindest einen Durchlassabschnitt 11 ausgegeben wird. Die Struktur 12 wird nachfolgend auch als Streustruktur 12 und die Abschnitte 13 als Streuabschnitte 13 bezeichnet. Der jeweilige Streuabschnitt 13 ist derart ausgestaltet, dass der Streuabschnitt 13 das von der Spiegelungsanordnung 9 zurück reflektierte Licht in Richtung der Basisscheiben-Innenseite 4 streut, wie in Figur 2 mit Pfeilen angedeutet ist. Dabei ist die Streustruktur 12 im gezeigten Ausführungsbeispiel an der Funktionsfolie 14 angebracht.

Wie insbesondere Figur 2 ferner entnommen werden kann, weist im gezeigten Ausführungsbeispiel die Spiegelungsanordnung 9 zumindest einen Bereich 16 auf, welcher frei von Spiegelungsabschnitten 10 und somit für das Licht der Leuchtmittel 7 transparent ist. Dieser Bereich 16 wird nachfolgend auch als Durchlassbereiche 16 bezeichnet. In den Durchlassbereichen 16 kann das Licht also über die Basisscheiben-Innenseite 4 aus der Scheibenbaugruppe 1 gelangen. Dabei weist die Spiegelungsanordnung 9 im gezeigten Ausführungsbeispiel an der Basisscheiben-Innenseite im Lichtkegel 15 des jeweiligen Leuchtmittels 9 solche Spiegelabschnitte 10 auf und ist außerhalb des Lichtkegels 15 frei von Spiegelabschnitten 10. Somit sind Bereiche außerhalb des Lichtkegels 15 Durchlassbereiche 16. In der Folge kann das vom jeweiligen Leuchtmittel 7 erzeugte Licht nicht gänzlich unmittelbar aus der Scheibenbaugruppe 1 gelangen, sodass sogenannte "Hotspots" des Lichts vermieden werden.

Wie Figur 2 ferner entnommen werden kann, sind im gezeigten Ausführungsbeispiel die Streuabschnitte 13 gruppiert angeordnet, sodass die Streustruktur 12 von Streuabschnitten 13 freie Bereiche 17 aufweist, welche nachfolgend auch als Freibereiche 17 bezeichnet werden. In den Freibereichen 17 wird das Licht also nicht gestreut. Die Leuchtmittel 7 sind jeweils in einem solchen Freibereiche 17 angeordnet, die Streustruktur 12 also im Bereich der Leuchtmittel 9 frei von Streuabschnitten 13. Zudem sind im gezeigten Ausführungsbeispiel Durchlassbereiche 16 der Spiegelungsanordnung 9 und Freibereiche 17 der Streustruktur 12 quer zur Abstandsrichtung 101 der Basisscheiben-Innenseite 4 zur Basisscheiben-Außenseite 5 zueinander beabstandet, sodass zumindest ein Durchlassbereich 16 mit den gruppierten Streuabschnitten 13 überlappt. Somit wird, wie in Figur 2 mit den Pfeilen angedeutet, das von den Spiegelabschnitten 10 der Spiegelungsanordnung 9 zurück reflektierte Licht von den Streuabschnitten 13 in Richtung des Durchlassbereiches 16 gestreut.

## Patentansprüche

1. Scheibenbaugruppe (1), insbesondere Dachscheibenbaugruppe (2), für ein Kraftfahrzeug (50),
- mit einer transparenten Basisscheibe (3), welche eine Basisscheiben-Innenseite (4) und eine von der Basisscheiben-Innenseite (4) abgewandte Basisscheiben-Außenseite (5) aufweist,
- mit einer Leuchtmittelanordnung (6), welche auf der von der Basisscheiben-Innenseite (4) abgewandten Seite der Basisscheiben-Außenseite (5) angeordnet ist und zumindest ein Leuchtmittel (7), insbesondere zumindest eine LED (8), aufweist,
- wobei das jeweilige Leuchtmittel (7) derart ausgestaltet ist, dass es im Betrieb Licht erzeugt und in Richtung der Basisscheiben-Innenseite (4) ausgibt,
**dadurch gekennzeichnet,**
- **dass** die Scheibenbaugruppe (1) eine Spiegelungsanordnung (9) aufweist, welche auf der Basisscheiben-Innenseite (4) angeordnet ist,
- **dass** die Spiegelungsanordnung (9) zumindest einen Spiegelabschnitt (10) und zumindest einen Durchlassabschnitt (11) aufweist,
- **dass** der jeweilige Spiegelabschnitt (10) derart ausgestaltet ist, dass der Spiegelabschnitt (10) das Licht zumindest eines der wenigstens einen Leuchtmittel (7) hin zur Basisscheiben-Außenseite (5) zurück reflektiert,
- **dass** der jeweilige Durchlassabschnitt (11) derart ausgestaltet ist, dass der Durchlassabschnitt (11) für das Licht zumindest eines der wenigstens einen Leuchtmittel (7) transparent ist, sodass das Licht aus dem Scheibenbaugruppe (1) tritt.

2. Scheibenbaugruppe nach Anspruch 1,
**dadurch gekennzeichnet,**
**dass** die Spiegelungsanordnung (9) zumindest zwei Spiegelabschnitte (10) und zumindest einen die Spiegelabschnitte (10) entlang der Basisscheiben-Innenseite (4) voneinander trennende Durchlassabschnitt (11) aufweist.

3. Scheibenbaugruppe nach Anspruch 1 oder 2,
**dadurch gekennzeichnet,**
**dass** auf der von der Basisscheiben-Innenseite (4) abgewandten Seite der Basisscheiben-Außenseite (5) eine Streustruktur (12) mit zumindest einem Streuabschnitt (13) angeordnet ist, wobei der jeweilige Streuabschnitt (13) derart ausgestaltet ist, dass der Streuabschnitt (13) das von der Spiegelungsanordnung (9) zurück reflektierte Licht in Richtung der Basisscheiben-Innenseite (4) streut.

4. Scheibenbaugruppe nach einem der Ansprüche 1 bis 3,
**dadurch gekennzeichnet,**
**dass** die Leuchtmittelanordnung (6) eine Funktionsfolie (14) aufweist, an welcher das zumindest eine Leuchtmittel (7) angebracht ist.

5. Scheibenbaugruppe nach Anspruch 3 und 4,
**dadurch gekennzeichnet,**
**dass** die Streustruktur (12) an der Funktionsfolie (14) angebracht ist.

6. Scheibenbaugruppe nach einem der Ansprüche 1 bis 5,
**dadurch gekennzeichnet,**
**dass** die Spiegelungsanordnung (9) an der Basisscheiben-Innenseite im Lichtkegel (15) zumindest eines der wenigstens einen Leuchtmittel (9) solche Spiegelabschnitte (10) aufweist und außerhalb des Lichtkegels (15) frei von Spiegelabschnitten (10) ist.

7. Scheibenbaugruppe nach einem der Ansprüche 3 bis 6,
**dadurch gekennzeichnet,**
**dass** die Streustruktur (12) im Bereich zumindest eines der wenigstens einen Leuchtmittel (9) frei von Streuabschnitten (13) ist und zum Leuchtmittel (9) beabstandet Streuabschnitte (13) aufweist.

8. Scheibenbaugruppe nach Anspruch 6 und 7,
**dadurch gekennzeichnet,**
**dass** von Spiegelabschnitten (10) freie Durchlassbereiche (16) der Spiegelungsanordnung (9) und von Streuabschnitten (13) freie Freibereiche (17) der Streustruktur (12) quer zur Abstandsrichtung (101) der Basisscheiben-Innenseite (4) zur Basisscheiben-Außenseite (5) zueinander beabstandet sind.

9. Scheibenbaugruppe nach einem der Ansprüche 1 bis 8,
**dadurch gekennzeichnet,**
**dass** die Scheibenbaugruppe (1) auf der von der Basisscheiben-Außenseite (5) abgewandten Seite der Leuchtmittelanordnung (6) eine Deckscheibe (18) aufweist, an welcher die Leuchtmittelanordnung (6), insbesondere die Funktionsfolie (14), angebracht ist.

10. Kraftfahrzeug (50) mit einer Scheibenbaugruppe (1) nach einem der Ansprüche 1 bis 9, wobei die Scheibenbaugruppe (1) einen Innenraum (51) des Kraftfahrzeugs (50) begrenzt.

## Claims

1. Panel assembly (1), in particular a roof panel assembly (2), for a motor vehicle (50),
- comprising a transparent base panel (3) which has a base panel inner face (4) and a base panel outer face (5) which faces away from the base panel inner face (4),
- comprising a lamp arrangement (6) which is arranged on the side of the base panel outer face (5) that faces away from the base panel inner face (4) and which has at least one lamp (7), in particular at least one LED (8),
- each lamp (7) being designed such that, during operation, it generates light and emits the light in the direction of the base panel inner face (4),
**characterized in that**
- the panel assembly (1) has a mirroring arrangement (9) which is arranged on the base panel inner face (4),
- the mirroring arrangement (9) has at least one mirror portion (10) and at least one transmission portion (11),
- each mirror portion (10) is designed such that the mirror portion (10) reflects the light from at least one of the at least one lamps (7) back toward the base panel outer face (5),
- each transmission portion (11) is designed such that the transmission portion (11) is transparent to the light of at least one of the at least one lamp (7) so that the light emerges from the panel assembly (1).

2. Panel assembly according to claim 1,
**characterized in that**
the mirroring arrangement (9) has at least two mirror portions (10) and at least one transmission portion (11) which separates the mirror portions (10) from one another along the base panel inner face (4).

3. Panel assembly according to claim 1 or claim 2,
**characterized in that**
a scattering structure (12) having at least one scattering portion (13) is arranged on the side of the base panel outer face (5) which faces away from the base panel inner face (4), each scattering portion (13) being designed such that the scattering portion (13) scatters the light reflected back from the mirroring arrangement (9) toward the base panel inner face (4).

4. Panel assembly according to any of claims 1 to 3,
**characterized in that**
the lamp arrangement (6) has a functional film (14) to which at least one lamp (7) is attached.

5. Panel assembly according to claims 3 and 4,
**characterized in that**
the scattering structure (12) is attached to the functional film (14).

6. Panel assembly according to any of claims 1 to 5,
**characterized in that**
the mirroring arrangement (9) has such mirror portions (10) on the base panel inner face in the light cone (15) of at least one of the at least one lamps (9) and is free of mirror portions (10) outside of the light cone (15).

7. Panel assembly according to any of claims 3 to 6,
**characterized in that**
the scattering structure (12) is free of scattering portions (13) in the region of at least one of the at least one lamps (9) and has scattering portions (13) spaced apart from the lamp (9).

8. Panel assembly according to claims 6 and 7,
**characterized in that**
transmission regions (16) of the mirroring arrangement (9) that are free from mirror portions (10) and free regions (17) of the scattering structure (12) that are free from scattering portions (13) are spaced apart from one another perpendicularly to the spacing direction (101) of the base panel inner face (4) to the base panel outer face (5).

9. Panel assembly according to any of claims 1 to 8,
**characterized in that**
the panel assembly (1) has, on the side of the lamp arrangement (6) which faces away from the base panel outer face (5), a cover panel (18) to which the lamp arrangement (6), in particular the functional film (14), is attached.

10. Motor vehicle (50) with a panel assembly (1) according to any of claims 1 to 9, wherein the panel assembly (1) defines an interior space (51) of the motor vehicle (50).

## Revendications

1. Ensemble de vitres (1), en particulier ensemble de vitres de toit (2), pour un véhicule automobile (50),
- comportant une vitre de base (3) transparente qui présente une face intérieure de vitre de base (4) et une face extérieure de vitre de base (5) opposée à la face intérieure de vitre de base (4),
- comportant un agencement de moyens d'éclairage (6) qui est disposé sur la face de la face extérieure de vitre de base (5) opposée à la face intérieure de vitre de base (4) et qui présente au moins un moyen d'éclairage (7), en particulier au moins une DEL (8),
- dans lequel le moyen d'éclairage (7) respectif est configuré de telle sorte que, lors du fonctionnement, il génère de la lumière et l'émet en direction de la face intérieure de vitre de base (4),
**caractérisé en ce**
- **que** l'ensemble de vitres (1) présente un agencement de réflexion (9) qui est disposé sur la face intérieure de vitre de base (4),
- **que** l'agencement de réflexion (9) présente au moins une section formant miroir (10) et au moins une section de passage (11),
- **que** la section formant miroir (10) respective est conçue de telle sorte que la section formant miroir (10) réfléchit la lumière d'au moins l'un de l'au moins un moyen d'éclairage (7) pour la retourner vers la face extérieure de vitre de base (5),
- **que** la section de passage (11) respective est conçue de telle sorte que la section de passage (11) est transparente pour la lumière d'au moins l'un de l'au moins un moyen d'éclairage (7), de sorte que la lumière sort de l'ensemble de vitres (1).

2. Ensemble de vitres selon la revendication 1,
**caractérisé en ce**
**que** l'agencement de réflexion (9) présente au moins deux sections formant miroirs (10) et au moins une section de passage (11) séparant les sections formant miroirs (10) l'une de l'autre le long de la face intérieure de vitre de base (4).

3. Ensemble de vitres selon la revendication 1 ou 2,
**caractérisé en ce**
**qu'**une structure de diffusion (12) comportant au moins une section de diffusion (13) est disposée sur la face de la face extérieure de vitre de base (5) opposée à la face intérieure de vitre de base (4), dans lequel la section de diffusion (13) respective est conçue de telle sorte que la section de diffusion (13) diffuse la lumière réfléchie et retournée par l'agencement de réflexion (9) en direction de la face intérieure de vitre de base (4).

4. Ensemble de vitres selon l'une des revendications 1 à 3,
**caractérisé en ce**
**que** l'agencement de moyens d'éclairage (6) présente un film fonctionnel (14) sur lequel est appliqué l'au moins un moyen d'éclairage (7).

5. Ensemble de vitres selon les revendications 3 et 4,
**caractérisé en ce**
**que** la structure de diffusion (12) est appliquée sur le film fonctionnel (14).

6. Ensemble de vitres selon l'une des revendications 1 à 5,
**caractérisé en ce**
**que** l'agencement de réflexion (9) présente de telles sections formant miroirs (10) sur la face intérieure de vitre de base dans le cône de lumière (15) d'au moins l'un de l'au moins un moyen d'éclairage (9) et est exempt de sections formant miroirs (10) en dehors du cône de lumière (15).

7. Ensemble de vitres selon l'une des revendications 3 à 6,
**caractérisé en ce**
**que** la structure de diffusion (12) est exempte de sections de diffusion (13) dans la zone d'au moins l'un de l'au moins un moyen d'éclairage (9) et présente des sections de diffusion (13) espacées du moyen d'éclairage (9).

8. Ensemble de vitres selon les revendications 6 et 7,
**caractérisé en ce**
**que** des zones de passage (16) de l'agencement de réflexion (9) exemptes de sections formant miroirs (10) et des zones libres (17) de la structure de diffusion (12) exemptes de sections de diffusion (13) sont espacées les unes des autres transversalement à la direction d'espacement (101) de la face intérieure de vitre de base (4) par rapport à la face extérieure de vitre de base (5).

9. Ensemble de vitres selon l'une des revendications 1 à 8,
**caractérisé en ce**
**que** l'ensemble de vitres (1) présente, sur la face de l'agencement de moyens d'éclairage (6) opposée à la face extérieure de vitre de base (5), une vitre de recouvrement (18) sur laquelle est appliqué l'agencement de moyens d'éclairage (6), en particulier le film fonctionnel (14).

10. Véhicule automobile (50) comportant un ensemble de vitres (1) selon l'une des revendications 1 à 9, dans lequel l'ensemble de vitres (1) délimite un espace intérieur (51) du véhicule automobile (50).
